# FASCICULE DE BREVET EUROPEEN

(11) **EP 0 904 254 B1**
(45) Date de publication et mention de la délivrance du brevet: **29.03.2000**
(21) Numéro de dépôt: 97927233.3
(22) Date de dépôt: 04.06.1997
(51) Int. Cl.: C03C 17/32, C03C 17/30

(54) **ARTICLE EN VERRE PORTANT UNE COUCHE PROTECTRICE TRANSPARENTE, RESISTANTE A L'ABRASION ET POUVANT ETRE ETIQUETEE ET PROCEDE POUR L'OBTENIR**
ETIKETTIERBARER GLASGEGENSTAND BESCHICHTET MIT EINER DURCHSICHTIGEN, HOCHABRIEBFESTEN SCHUTZBESCHICHTUNG UND VERFAHREN ZUR HERSTELLUNG
GLASSWARE WITH ABRASION RESISTANT, TRANSPARENT PROTECTIVE COATING CAPABLE OF BEING LABELLED AND METHOD FOR PRODUCING SAME

(30) Priorité: 11.06.1996 FR 9607234; 07.03.1997 FR 9702728
(43) Date de publication de la demande: 31.03.1999
(73) Titulaire: Elf Atochem Vlissingen B.V., 4389 PD Vlissingen-Oost (NL)
(72) Inventeur: BOUMERA, Jean-Marc, F-64170 Serres-Sainte-Marie (FR); BOURREL, Maurice, F-64000 Pau (FR); CHABAGNO, Jean-Michel, F-64000 Pau (FR); GIJSEN, Hendrikus, Johannes, Cornelis, NL-4388 VJ Oost-Souburg (NL); HOEKMAN, Leendert, Cornelis, NL-4461 NM Goes (NL)
(74) Mandataire: Luziau, Nelly
(86) Numéro de dépôt international: FR9700988
(87) Numéro de publication internationale: WO9747563

(56) Documents cités:
- EP-A- 0 240 919
- GB-A- 977 820
- US-A- 3 663 254
- US-A- 3 718 449
- US-A- 3 801 361
- US-A- 3 873 352
- US-A- 4 130 673

## Description

L'invention est relative à des articles en verre, en particulier du verre creux, portant un revêtement qui, tout en leur conférant une bonne résistance à l'abrasion, présente un bon aspect (revêtement homogène, transparent et invisible) et permet l'adhérence d'étiquettes.

Les articles en verre, en particulier le verre creux, lors de leur manipulation, leur remplissage, leur empaquetage et éventuellement leur lavage avant réutilisation, peuvent se heurter les uns contre les autres entraînant une abrasion, en particulier des rayures, qui réduit leur résistance mécanique.

On a déjà traité la surface d'articles en verre pour améliorer leur résistance à l'abrasion, que ces articles en verre soient secs ou bien humides par suite de leur lavage par exemple.

Ainsi le document US 3 438 801 décrit le traitement de bouteilles de verre pour améliorer leur résistance à l'abrasion à sec, par dépôt, dans une première étape, à 150°C, d'une solution aqueuse d'un diaminosilane (le 3-(2-aminoéthyl)aminopropyltriméthoxysilane, appelé ici DAMO) et, dans une deuxième étape à 140°C, d'une émulsion aqueuse de polyéthylène associé à de l'oléate de potassium.

Ces bouteilles en verre sont, en général, destinées à être étiquetées et, par conséquent, la couche résistante à l'abrasion appliquée sur la surface du verre doit permettre aussi une bonne adhérence d'une étiquette par l'intermédiaire des colles usuelles, comme la caseine, la dextrine. Pour obtenir cette bonne adhérence ainsi qu'une résistance à l'abrasion appropriée, dans le brevet US 3 873 352, on traite la surface du verre par une composition aqueuse contenant du polyéthylèneiminepropyltriméthoxysilane ayant une masse moléculaire d'environ 1400 (ou un mélange de ce silane avec un diaminosilane, le DAMO) et du polyéthylène associé à de l'oléate de potassium.

On a cependant noté que ces couches présentent un aspect trouble qui rend l'article en verre inutilisable et que la résistance à l'abrasion à l'état humide n'est pas suffisante. En outre, certaines de ces couches ne permettent pas une bonne adhérence d'étiquettes.

On a donc cherché à former, sur des surfaces en verre, des revêtements qui ont un bon aspect, sur lesquels des étiquettes adhèrent bien, tout en conférant des propriétés de résistance à l'abrasion à sec et à l'état humide.

On a aussi cherché un procédé simple pour les réaliser, qui soit exploitable industriellement, aussi bien sur la chaîne de fabrication de ces articles en verre que lors de leur recyclage par exemple pour leur remplissage.

Les articles en verre, selon l'invention, qui ont ces propriétés recherchées, portent un revêtement résultant de l'application, sur la surface du verre, d'au moins un monoaminosilane et d'au moins une substance lubrifiante, le(s) monoaminosilane(s) répondant à la formule générale : 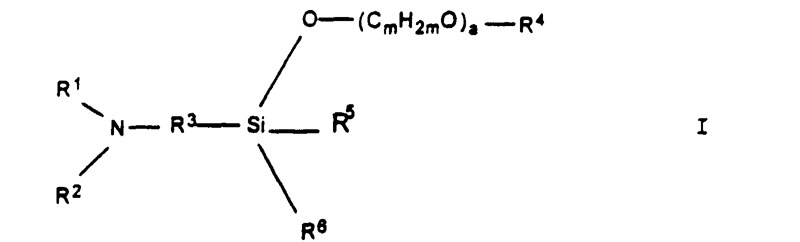 ou sa forme quaternisée : 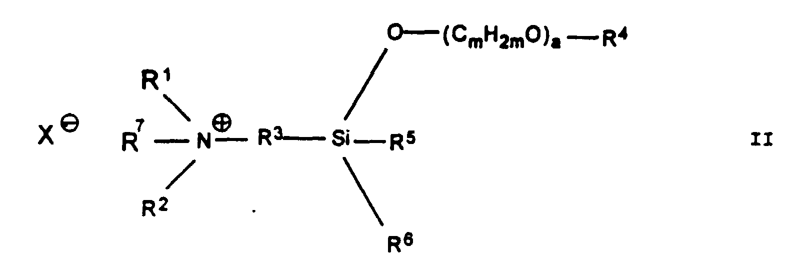 dans lesquelles :
- R¹ et R², identiques ou différents, représentent, chacun, un atome d'hydrogène ou un groupe alkyle ayant de 1 à 4 atomes de carbone,
- R³ est un groupe alkylène linéaire ou ramifié contenant 2 à 11 atomes de carbone, en particulier 3 à 5 atomes de carbone, un groupe oxyalkylène ou polyoxyalkylène ayant de 2 à 4 atomes de carbone dans la chaîne alkylène, ce groupe oxyalkylène ou polyoxyalkylène étant lié au silicium par un atome de carbone,
- R⁴ représente un groupe alkyle contenant 1 à 4 atomes de carbone,
- R⁵ et R⁶, identiques ou différents, représentent, chacun, un groupe alkyle ayant 1 à 4 atomes de carbone ou bien un groupe -O- (CₙH₂ₙ O)_{b} -R⁴ dans lequel R⁴ a la signification précédente,
- m et n, identiques ou différents, représentent, chacun, le nombre entier 2, 3 ou 4,
- a et b, identiques ou différents, représentent, chacun, le nombre entier 0, 1 ou 2,
- R⁷ représente un atome d'hydrogène ou un groupe alkyle ayant de 1 à 4 atomes de carbone,
- X^{⊖} est un anion, tel que chlorure, bromure, sulfate ou méthylsulfate.

Dans le revêtement, la quantité sèche de monoaminosilane(s) déposée(s) sur la surface utile de verre est comprise entre 10⁻⁴ mg/cm² et 5 x10⁻²mg/cm² et de préférence 6 x 10⁻³ mg/cm² et 5 x10⁻²mg/cm² et la quantité sèche de substance(s) lubrifiante(s) déposée sur la surface utile de verre est comprise entre 5 x 10⁻⁴mg/cm² et 5 x 10⁻²mg/cm² et, de préférence, entre 2 x 10⁻³mg/cm² et 10⁻²mg/cm².

Par surface utile, on entend la surface de l'article en verre, habituellement soumise à l'abrasion et qui doit, par conséquent, recevoir un revêtement protecteur.

Dans les formules précédentes des monoaminosilanes, R¹ et R², identiques ou différents, représentent, de préférence, un atome d'hydrogène ou un groupe méthyle ; R³ est, par exemple, un groupe propylène, butylène, isopropylène et, de préférence, propylène, un groupe oxyéthylène, oxypropylène oxybutylène ou polyoxyéthylène, polyoxypropylène ou polyoxybutylène ou un groupe polyoxyalkylène comprenant plusieurs motifs oxyalkylène différents ; R⁴ représente de préférence un groupe méthyle ou éthyle ; R⁵ et R⁶, identiques ou différents, représentent chacun, de préférence un groupe méthyle ou éthyle ou bien le groupe -O-(CₙH₂ₙO)_{b}-R⁴; m et n représentent, de préférence, le nombre entier 2 ou 3 ; a et b représentent de préférence le nombre 0, 1 ou 2 ; R⁷ est, de préférence, un atome d'hydrogène ou un groupe méthyle et X^{⊖} est l'anion chlorure, bromure, sulfate ou méthylsulfate.

Des monoaminosilanes particulièrement utiles dans l'invention sont, par exemple, le 3-aminopropyl-triméthoxysilane, le 3-aminopropyl-triéthoxysilane, le 4-aminobutyl-triméthoxysilane, le N-méthyl-3-amino propyl-triméthoxysilane et le 3-aminopropyl-tris(2-méthoxy-éthoxy-éthoxy)silane.

La substance lubrifiante, utile dans l'invention, peut être avantageusement, de l'acide oléique, du stéarate de sodium, du stéarate d'ammonium, un acétate d'alkylamine à chaîne longue (nombre d'atomes de carbone supérieur ou égal à 8) comme le suif ou le coco, du polyéthylène glycol, une polyoléfine ou un mélange de ces produits. En particulier, elle est une polyoléfine éventuellement oxydée ou partiellement oxydée.

La polyoléfine oxydée ou partiellement oxydée peut être avantageusement du polyéthylène, polypropylène, polyisobutylène. Elle est de préférence du polyéthylène.

On utilise avantageusement du polyéthylène oxydé ou partiellement oxydé qui a une masse moléculaire moyenne en poids relativement faible, par exemple comprise entre 1 000 et 15 000.

Le procédé pour fabriquer cet article en verre consiste à déposer sur la surface du verre le ou les silane(s) et la ou les substance(s) lubrifiantes et à les traiter thermiquement d'une façon simultanée ou subséquente.

Le traitement thermique a lieu à une température comprise entre 60°C et 160°C et plus particulièrement entre 80°C et 150°C. Aux températures supérieures à 160°C, les couches obtenues ne permettent pas une bonne adhérence des étiquettes et la qualité optique du dépôt est insuffisante.

En particulier, pour obtenir le revêtement ayant les propriétés souhaitées, il suffit de porter au moins la surface de verre à une température de l'intervalle indiqué, c'est-à-dire à une température comprise entre 60°C et 160°C, et avantageusement entre 80°C et 150°C, avant ou après le dépôt des composants silane(s) et substance(s) lubrifiante(s). La température de la surface peut être contrôlée par tout moyen approprié, par exemple en utilisant un pyromètre à infrarouge.

Le procédé de dépôt sur la surface de verre, décrit précédemment, peut se faire en une seule étape, le(s) silane(s) et la ou les substance(s) lubrifiante(s) se trouvant dans la même composition. Il est possible, aussi, de déposer dans une première étape le(s) silane(s), puis la ou les substance(s) lubrifiante(s) dans une deuxième étape.

Le revêtement formé sur la surface du verre est obtenu, par exemple, à partir de compositions aqueuses de monoaminosilane(s) et de substance(s) lubrifiante(s).

En particulier, que le dépôt soit réalisé en une seule étape ou en deux étapes, les compositions aqueuses, utilisées pour ces dépôts, peuvent contenir de 0,005 % à 2 % en poids, de préférence de 0,01 % à 1,5 % en poids de monoaminosilane(s) et de 0,10 % à 2 % en poids, de préférence de 0,15 % à 1,5 % en poids de substance(s) lubrifiante(s).

Comme indiqué précédemment, la substance lubrifiante est avantageusement une polyoléfine éventuellement oxydée ou partiellement oxydée. Elle est généralement sous forme d'émulsion aqueuse non ionique ou ionique.

Le dépôt peut être fait sur la surface de verre par tout procédé approprié, par exemple par brossage ou pulvérisation, particulièrement quand la surface à traiter est à température élevée, ou par pulvérisation ou trempage dans une solution aqueuse, lorsque la surface à traiter est à basse température.

La (ou les) composition(s) peut (vent) être pulvérisée(s) sur la surface de verre par tout moyen approprié et, notamment, en utilisant un dispositif de pulvérisation pneumatique; on peut aussi utiliser un dispositif de pulvérisation assisté par les ultrasons.

Lorsque le dépôt est fait par brossage, on peut utiliser une brosse imprégnée de la composition ou bien d'un précipité obtenu par précipitation en milieu acide des composants.

Suivant un mode de réalisation de l'invention, on dépose en une seule étape, une composition aqueuse de monoaminosilane(s) et de substance(s) lubrifiante(s). On peut déposer cette composition directement sur la surface de verre à une température comprise dans l'intervalle indiqué précédemment, c'est-à-dire à une température comprise entre 60°C et 160°C et, avantageusement, entre 80°C et 150°C. Le traitement thermique est alors simultané.

Il est aussi possible de déposer la composition de monoaminosilane(s) et de substance(s) lubrifiante(s) sur la surface de verre se trouvant à une température inférieure à 60°C, par exemple à la température ambiante ou à une température inférieure. C'est particulièrement le cas lorsque les articles en verre, comme des bouteilles, doivent être recyclés. Après le dépôt sur la surface de verre, on traite thermiquement les composants en portant au moins la surface de verre à une température comprise dans l'intervalle indiqué précédemment.

Un autre mode de réalisation de l'invention consiste à déposer, sur la surface de verre, dans une première étape, une solution aqueuse de monoaminosilane(s) et, dans une deuxième étape, une composition aqueuse de substance(s) lubrifiante(s). On peut déposer la solution aqueuse de silane(s) directement sur la surface de verre à une température comprise entre 60°C et 160°C, et on dépose ensuite la composition aqueuse de substance(s) lubrifiante(s) toujours à une température comprise entre 60°C et 160°C. Il peut être nécessaire, entre les deux dépôts, de réchauffer l'article en verre à traiter pour qu'au moins la surface du verre soit à la température nécessaire pour le dépôt de la composition aqueuse de substance(s) lubrifiante(s), c'est-à-dire à une température comprise dans l'invervalle précédent.

Un autre procédé consiste à déposer, d'abord, la solution aqueuse de silane(s) sur la surface du verre qui se trouve à une température inférieure à 60°C, par exemple à la température ambiante, puis à porter au moins la surface de verre à une température comprise entre 60°C et 160°C, de préférence entre 80°C et 150°C et, ensuite, à déposer la composition aqueuse de substance(s) lubrifiante(s). Pour réaliser ce dernier dépôt selon l'invention, au moins la surface de verre doit être portée, si nécessaire, à une température comprise entre 60°C et 160°C avant ou après le dépôt de cette composition aqueuse de substance(s) lubrifiante(s).

Selon un autre mode de réalisation de l'invention, on dépose successivement la solution aqueuse de silane(s) et la composition aqueuse de substance(s) lubrifiante(s) à une température inférieure à 60°C, puis on traite thermiquement le dépôt en portant au moins la surface de verre à une température comprise entre 60°C et 160°C.

Le traitement thermique peut se faire par tout moyen approprié. En particulier, il peut avoir lieu à la sortie de l'arche de recuisson, lors de la fabrication des articles en verre. Il peut être aussi réalisé dans un four, par projection d'air chaud, par radiation infra-rouge ou micro-ondes.

Lorsque le dépôt des composants silane(s) et substance(s) lubrifiante(s) se fait sur la surface du verre, à une température supérieure à 60°C ou, de préférence, supérieure à 80°C, la montée en température pour le traitement thermique n'est pas nécessaire ; dans ce cas, le dépôt et le traitement thermique se font simultanément.

Le dépôt des composants sur la surface des articles en verre à basse température peut présenter de l'intérêt, en particulier dans le cas de recyclage en vue d'une réutilisation des articles. Ce dépôt peut avoir lieu, par exemple, après le lavage de ces articles.

Dans les exemples, non limitatifs, qui illustrent l'invention, les articles en verre (bouteilles) sont placés sur un dispositif rotatif tournant à une vitesse de 75 à 130 tr/min et le dépôt se fait par pulvérisation.

Les bouteilles traitées sont ensuite testées pour déterminer leur résistance à l'abrasion à l'état sec et humide, l'aspect de la couche et l'adhérence d'une étiquette. Les tests sont les suivants ;

### 1/ Résistance à l'abrasion

Le test consiste à placer deux bouteilles ayant subi le même traitement, en position horizontale, l'une sur l'autre, leur génératrice faisant un angle de 30°, et à les presser l'une contre l'autre, tout en les faisant glisser l'une sur l'autre. Lorsque l'on accroît la pression, l'abrasion se produit au moment où il faut accroître la force exercée pour que les bouteilles continuent à glisser l'une sur l'autre. La force d'application est limitée à 450 N, car une force plus élevée entraînerait la casse d'une ou des deux bouteilles.

La valeur acceptable de la résistance à l'abrasion dépend des exigences nécessitées par l'utilisation des articles en verre. Des valeurs d'abrasion, à sec, de 200 N et à l'état humide de 100 N peuvent être considérées comme des valeurs minimales. On considère généralement qu'une bonne abrasion est obtenue pour des valeurs, à sec, supérieures à 300 N, et à l'état humide, supérieures à 200 N.

A titre d'information, avec des bouteilles non traitées, une abrasion apparaît à partir de 20 N environ.

### 2/ Adhérence d'une étiquette

On applique une étiquette en papier à l'aide d'une colle usuelle, telle qu'une colle aqueuse à base de caseine. On laisse sécher 3 à 4 heures à température ambiante ou bien 20 minutes à 60°C.

Pour déterminer l'adhérence de l'étiquette, on tente d'arracher cette dernière et on observe la surface de l'étiquette restant sur le verre :

| | |
|---|---|
| 100 % de l'étiquette | adhérence excellente |
| 80 % de l'étiquette | adhérence acceptable |
| < 80 % de l'étiquette | adhérence non acceptable |

### 3/ Aspect de la couche

La couche doit être homogène, transparente et invisible.

L'examen est visuel :
Couche non visible, bon aspect = valeur 0

Couche, dans l'ensemble, non visible avec,
cependant, de très petits points visibles,
aspect acceptable = valeur 1
Couche visible, aspect non acceptable = valeur 2
Aspect trouble, non acceptable = valeur 3

Dans ces exemples, on utilise :
- comme silane, le 3-aminopropyl-triméthoxysilane: APTMO
   le 3-aminopropyl-triéthoxysilane : APTEO
   le [3-(2-amino éthyl)aminopropyl]-triméthoxysilane : DAMO
   ou le N-méthyl-3-aminopropyl-triméthoxysilane : MAPTMO
- comme polyoléfine, on utilise du polyéthylène oxydé ou partiellement oxydé :
   - le produit GLASSKOTE ® SC100 de la Société Elf Lubricants North America, se présentant sous forme d'émulsion aqueuse à 25 % de matières solides ;
   - le produit OG®25 de la Société Trüb Emulsion, se présentant sous la forme d'une émulsion aqueuse à 25 % de matières solides ;
   - le produit AC®629 de la Société Allied Signal, se présentant sous la forme d'émulsion aqueuse à 25 % de matières solides.

### EXEMPLE 1

### a) Préparation de la composition aqueuse

Dans un flacon de 250 ml muni d'un barreau magnétique, on a introduit 0,60 g d'une émulsion aqueuse de polyéthylène SC100 et 20 g d'eau.

Après avoir agité pendant 1 minute, on ajoute 0,5 g d'APTEO. On agite pendant 1 minute, puis on complète jusqu'à 100 g avec de l'eau et on agite encore pendant 1 minute.

La composition ainsi préparée, contenant 0,15 % de polyéthylène et 0,5 % de silane (APTEO), est prête à l'emploi.

### b) Procédé de dépôt

On chauffe les bouteilles de verre à traiter dans une étuve à 140°C-150°C pendant une heure. On fixe les bouteilles chaudes sur un dispositif rotatif.

Tout en faisant tourner le dispositif rotatif à une vitesse de 120 t/min, on pulvérise la composition, pendant 5 secondes, à l'aide d'un dispositif de pulvérisation pneumatique (pression de 2 bars).

On laisse refroidir les bouteilles jusqu'à la température ambiante. Les quantités sèches de produits sont les suivantes : silane : 8,2 x 10⁻³ mg/cm² ; polymère : 2,5 x 10⁻³ mg/cm².

On colle une étiquette à l'aide d'une colle aqueuse du type caseine ; puis on soumet les bouteilles aux tests mentionnés précédemment. Les résultats sont indiqués au tableau 1.

### EXEMPLE 2

On opère comme à l'exemple 1 ; les composants (silane et polymère), leur pourcentages et les résultats des tests sont indiqués au tableau 1. Les quantités sèches de produits sont les suivantes : silane : 8,2 x 10⁻³ mg/cm² ; polymère : 8,2 x 10⁻³ mg/cm².

### EXEMPLE 3

On opère comme à l'exemple 1, mais on utilise une émulsion aqueuse, à 25 % de matières solides de polyéthylène partiellement oxydé (OG®25 de la Société Trüb Emulsion). Les quantités sèches de produits sont les suivantes : silane : 8,2 x 10⁻³ mg/cm² ; polymère : 4,1 x 10⁻³ mg/cm².

Les résultats sont donnés au tableau 1.

### EXEMPLE 4

On opère comme à l'exemple 1, mais on utilise comme monoaminosilane, le N-méthyl-3-aminopropyl-triméthoxysilane (MAPTMO). Les composants (silane et polymère), leur pourcentage et les résultats des tests sont indiqués au tableau 1. Les quantités sèches de produits sont les suivantes : silane : 8,2 x 10⁻³ mg/cm² ; polymère : 4,1 x 10⁻³ mg/cm².

### EXEMPLES 5 A 8

On opère comme à l'exemple 1. Les composants (silane et polymère), leur pourcentage et les résultats des tests sont indiqués au tableau 1. Les quantités sèches de produits sont les suivantes :

| | Silane | Polymère |
|---|---|---|
| Ex. 5 | 4,1 x 10⁻³ mg/cm² | 2,1 x 10⁻³ mg/cm² |
| Ex. 6 | 4,9 x 10⁻³ mg/cm² | 2,5 x 10⁻³ mg/cm² |
| Ex. 7 | 4,1 x 10⁻³ mg/cm² | 4,1 x 10⁻³ mg/cm² |
| Ex. 8 | 2,5 x 10⁻³ mg/cm² | 4,1 x 10⁻³ mg/cm² |

### EXEMPLE 9 (comparatif)

Les tests indiqués précédemment sont réalisés sur des bouteilles de verre ne portant aucun dépôt.

Les résultats sont donnés au tableau 1.

### EXEMPLE 10 (comparatif)

On opère comme à l'exemple 1, mais on utilise comme silane, le [3-(2-aminoéthyl)aminopropyl]-triméthoxysilane (DAMO). Les quantités sèches de produits sont les suivantes : silane : 8,2 x 10⁻³ mg/cm² ; polymère : 2,5 x 10⁻³ mg/cm².

Les résultats sont donnés au tableau 1.

### EXEMPLE 11 (comparatif)

On forme, comme à l'exemple 1, un revêtement sur des bouteilles de verre à partir d'une composition aqueuse contenant 0,5 % de DAMO comme silane et 1 % de produit AC®629 (polyéthylène partiellement oxydé). Les quantités sèches de produits sont les suivantes : silane : 8,2 x 10⁻³ mg/cm² ; polymère : 1,6 x 10⁻² mg/cm².

Comme on peut le noter à partir des résultats donnés au tableau 1, les revêtements obtenus à partir d'une composition contenant un éthylène diaminopropyltriméthoxysilane (DAMO) ont une résistance à l'abrasion à l'état humide insuffisante et l'aspect du revêtement est inacceptable .

**TABLEAU 1**

| *Procédé en une étape* | | | | | | |
|---|---|---|---|---|---|---|
| **EX**. | **SILANE** | **POLYMERE** | **RESISTANCE A L'ABRASION A L'ETAT** | | **ASPECT** | **ADHERENCE D'UNE ETIQUETTE** |
| | | | **sec** | **humide** | | |
| 1 | APTEO 0, 5 % | SC100 0,15% | 350 | 250 | 1 | 100% |
| 2 | APTMO 0,5 % | SC100 0,5 % | 300 | 250 | 1 | 100 % |
| 3 | APTEO 0,5 % | OG25 0,25 % | 400 | 400 | 0 | 100 % |
| 4 | MAPTMO 0,5 % | OG25 0,25 % | 400 | 350 | 1 | 100 % |
| 5 | APTEO 0,25 % | OG25 0,125 % | 400 | 300 | 0 | 100 % |
| 6 | APTEO 0,3 % | OG25 0,15 % | 400 | 350 | 0 | 100 % |
| 7 | APTEO 0,25 % | OG25 0,25 % | 400 | 350 | 1 | 100 % |
| 8 | APTEO 0,15 % | OG25 0,25 % | 400 | 350 | 1 | 100 % |
| 9 comparatif | | | 20 | 20 | 0 | 100 % |
| 10 comparatif | DAMO 0,5 % | SC100 0,15 % | 300 | 100 | 2 | 100 % |
| 11 comparatif | DAMO 0,5 % | AC629 1 % | 400 | 100 | 3 | 100 % |

### EXEMPLE 12

On opère dans les mêmes conditions qu'à l'exemple 1, mais on chauffe les bouteilles de verre dans une étuve à 80-90°C. Les composants (silane et polymère), leur pourcentage et les résultats des tests sont indiqués au tableau 2. Les quantités sèches de produits sont les suivantes : silane : 8,2 x 10⁻³ mg/cm² ; polymère : 3,1 x 10⁻³ mg/cm².

### EXEMPLE 13

On opère comme dans l'exemple 1, mais on chauffe les bouteilles de verre dans une étuve à 120-130°C. Les composants, (silane et polymère), leur pourcentage et les résultats des tests sont indiqués au tableau 2. Les quantités sèches de produits sont les suivantes : silane : 8,2 x 10⁻³ mg/cm² ; polymère : 3,1 x 10⁻³ mg/cm².

### EXEMPLE 14

Dans cet exemple, on dépose la composition aqueuse de silane et polymère sur des bouteilles de verre à température ambiante :

### a) préparation de la composition aqueuse :

On opère comme indiqué à l'exemple 1 en utilisant les composants et les pourcentages donnés au tableau 2.

### b) le procédé de dépôt :

On fixe les bouteilles, qui sont à la température ambiante, sur un dispositif rotatif. Tout en faisant tourner le dispositif à une vitesse de 120tr/min, on pulvérise la composition, pendant 5 secondes, à l'aide d'un dispositif de pulvérisation pneumatique (pression de 2 bars).

On amène ensuite la température de la surface des bouteilles à 80°C à l'aide d'un four à infra-rouge dissipant une puissance de 18 KW.

On laisse refroidir les bouteilles jusqu'à la température ambiante. Les quantités sèches de produits sont les suivantes : silane : 8,2 x 10⁻³ mg/cm² ; polymère: 4,1 x 10⁻³mg/cm². On colle une étiquette à l'aide d'une colle aqueuse du type caséine, puis on soumet les bouteilles aux tests mentionnés précédemment. Les résultats sont indiqués au tableau 2.

**TABLEAU 2**

| *Procédé en une étape* | | | | | | |
|---|---|---|---|---|---|---|
| **EX**. | **SILANE** | **POLYMERE** | **RESISTANCE A L'ABRASION A L'ETAT** | | **ASPECT** | **ADHERENCE D'UNE ETIQUETTE** |
| | | | **sec** | **humide** | | |
| 12 | APTEO 0,5 % | OG25 0,19 % | 400 | 400 | 1 | 100 % |
| 13 | APTEO 0,5 % | OG25 0,19 % | 400 | 400 | 1 | 100 % |
| 14 | APTEO 0,5 % | OG25 0,25 % | 400 | 400 | 0 | 100 % |

### EXEMPLE 15 (deux étapes)

On dépose les deux composants (silane et polyéthylène) en deux étapes.

On utilise comme silane, de l'APTEO en solution aqueuse à 0,5 %.

Pour former le dépôt de polyéthylène, on utilise une émulsion aqueuse à 0,15 % de GLASSKOTE ® SC100.

On fixe des bouteilles de verre, chauffées en étuve à 140°C-150°C pendant une heure, sur un dispositif rotatif. Tout en faisant tourner le dispositif rotatif à une vitesse de 120tr/min, on pulvérise la solution aqueuse de silane pendant 5 secondes, à l'aide d'un dispositif de pulvérisation pneumatique (pression de 2 bars), puis on pulvérise la composition de polyéthylène pendant 5 secondes. On laisse refroidir et on soumet les bouteilles aux tests mentionnés précédemment. Les quantités sèches de produits sont les suivantes : silane : 8,2 x 10⁻³ mg/cm² ; polymère : 2,5 x 10⁻³ mg/cm².

Les résultats sont donnés au tableau 3.

### EXEMPLE 16 (deux étapes)

On opère comme à l'exemple 15. Les composants (silane et polymère), leur pourcentage et les résultats des tests sont indiqués au tableau 3. Les quantités sèches de produits sont les suivantes : silane : 1,6 x 10⁻³ mg/cm² ; polymère : 4,1 x 10⁻³ mg/cm².

### EXEMPLE 17 (deux étapes)

Dans cet exemple, on dépose la composition aqueuse de silane sur la surface de verre à basse température (1°C).

On opère comme à l'exemple 15 avec des composants (silane et polymère) et des pourcentages indiqués dans le tableau 3.

On fixe les bouteilles, qui sont à 1°C, sur un dispositif rotatif.

Tout en faisant tourner le dispositif à une vitesse de 120tr/min, on pulvérise la composition contenant le silane, pendant 5 secondes, à l'aide d'un dispositif de pulvérisation pneumatique (pression de 2 bars).

On amène ensuite la température de la surface des bouteilles à 80°C à l'aide d'un four à infra-rouge dissipant une puissance de 18 KW.

On laisse refroidir les bouteilles jusqu'à une température inférieure à 50°C, puis on applique la composition aqueuse contenant le polymère par la même méthode. On amène ensuite la température de la surface des bouteilles à 80°C à l'aide d'un four à infra-rouge dissipant une puissance de 18 KW.

On laisse refroidir les bouteilles jusqu'à la température ambiante. Les quantités sèches de produits sont les suivantes : silane : 1,6 x 10⁻³ mg/cm² ; polymère : 2,1 x 10⁻³ mg/cm².

On colle une étiquette à l'aide d'une colle aqueuse du type caséine ; puis on soumet les bouteilles aux tests mentionnés précédemment.

Les résultats sont indiqués au tableau 3.

### EXEMPLE 18 comparatif (deux étapes)

Dans cet exemple, on utilise, comme silane, le [3-(2-aminoéthyl)aminopropyl]-triméthoxysilane (DAMO) sous forme de solution aqueuse à 0,5 % et comme polyéthylène, le produit AC629 sous forme d'émulsion aqueuse à 0,15 % conformément à l'enseignement du brevet USP 3.438.801. Les conditions de dépôt sont celles de l'exemple 15. Les quantités sèches de produits sont les suivantes : silane : 8,2 x 10⁻³ mg/cm² ; polymère : 2,5 x 10⁻³ mg/cm².

Les résultats sont donnés au tableau 3.

**TABLEAU 3**

| *Procédé en deux étapes* | | | | | | |
|---|---|---|---|---|---|---|
| **EX.** | **ETAPE 1 SILANE** | **ETAPE 2 POLYMERE** | **RESISTANCE A L'ABRASION A L'ETAT** | | **ASPECT** | **ADHERENCE D'UNE ETIQUETTE** |
| | | | **sec** | **humide** | | |
| 15 | APTEO 0,5 % | SC100 0,15 % | 400 | 400 | 1 | 100 % |
| 16 | APTEO 0,1 % | OG 25 0,25 % | 400 | 400 | 1 | 100 % |
| 17 | APTEO 0,1 % | OG25 0,125 % | 400 | 350 | 0 | 100 % |
| 18 comparatif | DAMO 0,5 % | AC 629 0,15 % | 250 | 250 | 2 | non < 80 % |

## Revendications

1. Article en verre portant un revêtement pratiquement transparent, étiquetable et résistant à l'abrasion, ce revêtement résultant du dépôt sur la surface de l'article en verre, d'au moins un monoaminosilane et d'au moins une substance lubrifiante, le(s) monoaminosilane(s) répondant à la formule générale : 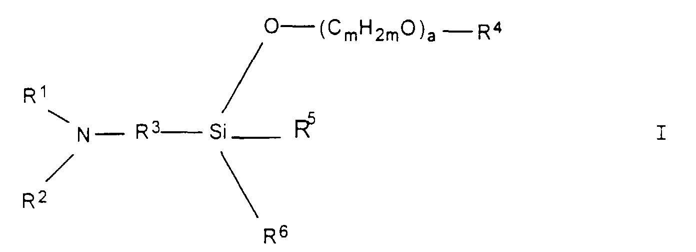 ou à sa forme quaternisée : 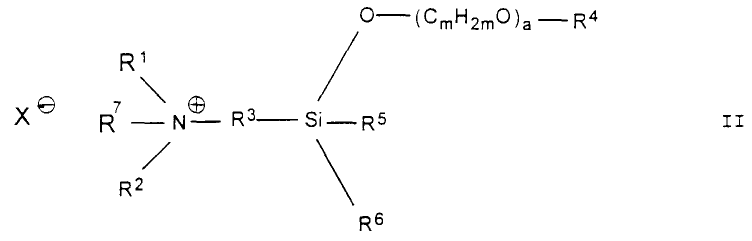 dans lesquelles :
- R¹ et R², identiques ou différents, représentent, chacun, un atome d'hydrogène ou un groupe alkyle ayant de 1 à 4 atomes de carbone,
- R³ est un groupe alkylène linéaire ou ramifié contenant 2 à 11 atomes de carbone, en particulier 3 à 5 atomes de carbone, un groupe oxyalkylène ou polyoxyalkylène ayant de 2 à 4 atomes de carbone dans la chaîne alkylène, ce groupe oxyalkylène ou polyoxyalkylène étant lié au silicium par un atome de carbone,
- R⁴ représente un groupe alkyle contenant 1 à 4 atomes de carbone,
- R⁵ et R⁶, identiques ou différents, représentent, chacun, un groupe alkyle ayant 1 à 4 atomes de carbone ou bien un groupe
-O-(CₙH₂ₙO)_{b} -R⁴
dans lequel R⁴ a la signification précédente,
- m et n, identiques ou différents, représentent, chacun, le nombre entier 2, 3 ou 4,
- a et b, identiques ou différents, représentent, chacun, le nombre entier 0, 1 ou 2,
- R⁷ représente un atome d'hydrogène ou un groupe alkyle ayant de 1 à 4 atomes de carbone,
- X^{⊖} est un anion,
et d'un traitement thermique simultané ou subséquent à ce dépôt consistant à porter, au moins la surface de l'article en verre, à une température comprise entre 60°C et 160°C,
la quantité sèche de monoaminosilane(s) sur la surface utile de verre étant comprise entre 10⁻⁴ mg/cm² et 5 x 10⁻² mg/cm² et la quantité sèche de substance(s) lubrifiante(s) sur la surface utile de verre étant comprise entre 5 x 10⁻⁴ mg/cm² et 5 x 10⁻² mg/cm².

2. Article selon la revendication 1, dans lequel le revêtement comprend une quantité sèche de monoaminosilane(s) déposée(s) sur la surface utile de verre comprise entre 6 x 10⁻³ et 5 x 10⁻² mg/cm² et une quantité sèche de substance(s) lubrifiante(s) déposée(s) sur la surface utile de verre comprise entre 2 x 10⁻³ mg/cm² et 10⁻² mg/cm².

3. Article conforme à l'une des revendications 1 et 2, dans lequel le revêtement résulte dudit dépôt et d'un traitement thermique simultané ou subséquent consistant à porter au moins la surface de l'article en verre à une température comprise entre 80°C et 150°C.

4. Article conforme à l'une des revendications 1 à 3, dans lequel le(s) monoaminosilane(s) correspondent aux formules I ou II dans lesquelles R¹ et R², identiques ou différents, représentent un atome d'hydrogène ou un groupe méthyle ; R³ est un groupe propylène, butylène, isopropylène ; R⁴ représente un groupe méthyle ou éthyle ; R⁵ et R⁶, identiques ou différents, représentent chacun un groupe méthyle ou éthyle ou bien le groupe -O-(CₙH₂ₙO)_{b}-R⁴; m et n représentent le nombre entier 2 ou 3 ; a et b représentent le nombre 0, 1 ou 2 ; R⁷ est un atome d'hydrogène ou un groupe méthyle et X^{⊖} est l'anion chlorure, bromure, sulfate ou méthylsulfate.

5. Article selon la revendication 4, dans lequel le(s) monoaminosilane(s) sont choisis dans le groupe formé par le 3-aminopropyl-triméthoxysilane, le 3-aminopropyltriéthoxysilane, le 4-aminobutyl-triméthoxysilane, le N-méthyl-3-amino-propyltriméthoxysilane, le 3-aminopropyl-tris(2-méthoxy-éthoxy-éthoxy)silane.

6. Article selon l'une des revendications 1 à 5, dans lequel la substance lubrifiante est choisie dans le groupe formé par l'acide oléique, le stéarate de sodium, le stéarate d'ammonium, l'acétate d'alkylamine à chaîne longue, du polyéthylène glycol, une polyoléfine ou un mélange de ces substances.

7. Article selon l'une des revendications 1 à 6, dans lequel la substance lubrifiante est une polyoléfine éventuellement oxydée ou partiellement oxydée.

8. Article conforme à la revendication 7, dans lequel la polyoléfine oxydée ou partiellement oxydée est du polyéthylène oxydé ou partiellement oxydé.

9. Article conforme à la revendication 8, dans lequel le polyéthylène a une masse moléculaire moyenne en poids comprise entre 1 000 et 15 000.

10. Article en verre portant un revêtement conforme à l'une des revendications 1 à 9, constitué par une bouteille en verre portant ledit revêtement.

11. Article conforme à la revendication 10, constitué par une bouteille en verre recyclée portant ledit revêtement.

12. Procédé de fabrication d'un article en verre conforme à l'une des revendications 1 à 11, caractérisé en ce qu'il consiste à déposer sur la surface de l'article en verre au moins une substance lubrifiante, le(s) monoaminosilane(s) répondant à la formule générale : 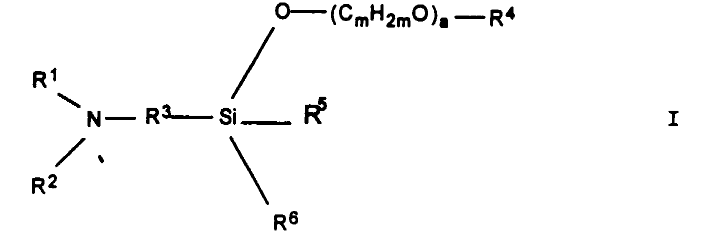 ou à sa forme quaternisée : 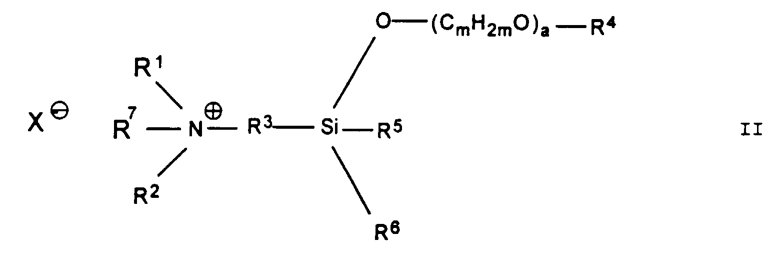 dans lesquelles :
- R¹ et R², identiques ou différents, représentent, chacun, un atome d'hydrogène ou un groupe alkyle ayant de 1 à 4 atomes de carbone,
- R³ est un groupe alkylène linéaire ou ramifié contenant 2 à 11 atomes de carbone, en particulier 3 à 5 atomes de carbone, ou bien un groupe oxyalkylène ou polyoxyalkylène ayant de 2 à 4 atomes de carbone dans la chaîne alkylène, ce groupe oxyalkylène ou polyoxyalkylène étant lié au silicium par un atome de carbone,
- R⁴ représente un groupe alkyle contenant 1 à 4 atomes de carbone,
- R⁵ et R⁶, identiques ou différents, représentent, chacun, un groupe alkyle ayant 1 à 4 atomes de carbone ou bien un groupe -O-(CₙH₂ₙO)_{b}-R⁴
dans lequel R⁴ a la signification précédente,
- m et n, identiques ou différents, représentent, chacun, le nombre entier 2, 3 ou 4,
- a et b, identiques ou différents, représentent, chacun, le nombre entier 0, 1 ou 2,
- R⁷ représente un atome d'hydrogène ou un groupe alkyle ayant de 1 à 4 atomes de carbone,
- X^{⊖} est un anion,
et à traiter thermiquement de façon simultanée ou subséquente à ce dépôt en portant au moins la surface de l'article en verre à une température comprise entre 60°C et 160°C, pour obtenir un revêtement dans lequel la quantité sèche de monoaminosilane(s) déposée(s) sur la surface utile de verre est comprise entre 10⁻⁴ mg/cm² et 5 x 10⁻² mg/cm² et la quantité sèche de substance(s) lubrifiante(s) déposée(s) sur la surface utile de verre est comprise entre 5 x 10⁻⁴ mg/cm² et 5 x 10⁻² mg/cm².

13. Procédé conforme à la revendication 12 dans lequel le traitement thermique simultané ou subséquent audit dépôt consiste à porter au moins la surface de l'article en verre à une température comprise entre 80°C et 150°C.

14. Procédé conforme à l'une des revendications 12 et 13 selon lequel on obtient un revêtement dans lequel la quantité sèche de monoaminosilane(s) déposée(s) sur la surface utile de verre est comprise entre 6 x 10⁻³ et 5 x 10⁻² mg/cm² et la quantité sèche de substance(s) lubrifiante(s) déposée(s) sur la surface utile de verre est comprise entre 5 x 10⁻⁴ et 5 x 10⁻² mg/cm2.

15. Procédé conforme à l'une des revendications 12 à 14, selon lequel on dépose, en une étape sur la surface de verre, une composition aqueuse de monoaminosilane(s) et de substance(s) lubrifiante(s).

16. Procédé conforme à la revendication 15, selon lequel on dépose la composition sur la surface de verre qui est à une température comprise entre 60°C et 160°C, de préférence entre 80°C et 150°C.

17. Procédé conforme à la revendication 15, selon lequel on dépose la composition sur la surface de verre à une température inférieure à 60°C, puis on traite thermiquement en portant au moins la surface de verre à une température comprise entre 60°C et 160°C, de préférence entre 80°C et 150°C.

18. Procédé conforme à l'une des revendications 12 à 14, selon lequel on dépose, dans une première étape, une solution aqueuse de monoaminosilane(s), et dans une deuxième étape, une composition aqueuse de substance(s) lubrifiante(s).

19. Procédé conforme à la revendication 18, selon lequel on dépose la solution aqueuse de monoaminosilane(s) sur la surface du verre qui est à une température comprise entre 60°C et 160°C, de préférence entre 80°C et 150°C, puis on dépose la composition aqueuse de substance(s) lubrifiante(s), la surface de verre étant à une température comprise entre 60°C et 160°C de préférence entre 80°C et 150°C.

20. Procédé conforme à la revendication 18, selon lequel :
a) on dépose, d'abord, la solution aqueuse de monoaminosilane(s) sur la surface du verre à une température inférieure à 60°C,
b) on porte ensuite au moins la surface du verre jusqu'à une température comprise entre 60°C et 160°C, de préférence entre 80°C et 150°C, et
c) on dépose la composition aqueuse de substance(s) lubrifiante(s), au moins la surface de verre étant portée à une température comprise entre 60°C et 160°C, de préférence entre 80°C et 150°C, avant ou après le dépôt de la composition aqueuse de substance(s) lubrifiante(s).

21. Procédé conforme à la revendication 18, selon lequel on dépose successivement la solution aqueuse de monoaminosilane(s) et la composition aqueuse de substance(s) lubrifiante(s) à une température inférieure à 60°C, puis on traite thermiquement en portant au moins la surface de verre à une température comprise entre 60°C et 160°C, de préférence entre 80°C et 150°C.

22. Procédé conforme à l'une des revendications 12 à 21, selon lequel on utilise au moins un monoaminosilane correspondant aux formules I ou Il, dans lesquelles R¹ et R², identiques ou différents, représentent un atome d'hydrogène ou un groupe méthyle ; R³ est un groupe propylène, butylène, isopropylène ; R⁴ représente un groupe méthyle ou éthyle ; R⁵ et R⁶, identiques ou différents, représentent chacun un groupe méthyle ou éthyle ou bien le groupe -O-(CₙH₂ₙO)_{b}-R⁴ ; m et n représentent le nombre entier 2 ou 3 ; a et b représentent le nombre 0, 1 ou 2 ; R⁷ est un atome d'hydrogène ou un groupe méthyle et X^{⊖} est l'anion chlorure, bromure, sulfate ou méthylsulfate.

23. Procédé conforme à la revendication 22, selon lequel on choisit le monoaminosilane dans le groupe formé par le 3-aminopropyl-triméthoxysilane, le 3-aminopropyl-triéthoxysilane, le 4-aminobutyl-triméthoxysilane, le N-méthyl-3-aminopropyl-triméthoxysilane, le 3-aminopropyl-tris(2-méthoxy-éthoxy-éthoxy)silane.

24. Procédé conforme à l'une des revendications 12 à 23, selon lequel on dépose les composants monoaminosilane(s) et substance(s) lubrifiante(s) en composition(s) aqueuse(s) contenant de 0,005 % à 2 % en poids, de préférence de 0,01 % à 1,5 % en poids de monoaminosilane(s) et de 0,10 % à 2 % en poids, de préférence de 0,15 % à 1,5 % en poids de substance(s) lubrifiante(s).

25. Procédé conforme à l'une des revendications 12 à 24, selon lequel la substance lubrifiante est choisie dans le groupe formé par l'acide oléique, le stéarate de sodium, le stéarate d'ammonium, l'acétate d'alkylamine à chaîne longue, du polyéthylène glycol, une polyoléfine ou un mélange de ces substances.

26. Procédé conforme à l'une des revendications 12 à 25, selon lequel la substance lubrifiante est une polyoléfine éventuellement oxydée ou partiellement oxydée.

27. Procédé conforme à la revendication 26, selon lequel on utilise, comme polyoléfine, du polyéthylène oxydé ou partiellement oxydé.

28. Procédé conforme à la revendication 27, dans lequel le polyéthylène a une masse moléculaire moyenne en poids comprise entre 1 000 et 15 000.

29. Procédé conforme à l'une des revendications 25 à 28, selon lequel la polyoléfine est sous forme d'émulsion aqueuse ionique ou non ionique.

30. Procédé conforme à l'une des revendications 12 à 29, selon lequel le traitement thermique est réalisé à l'aide d'un four, par projection d'air chaud, radiation infra-rouge ou micro-ondes.

31. Procédé conforme à l'une des revendications 12 à 16, 18 et 19, dans lequel le traitement thermique a lieu en sortie d'arche de recuisson.

32. Procédé conforme à l'une des revendications 12 à 31, selon lequel le dépôt a lieu sur la surface d'une bouteille en verre.

33. Procédé conforme à l'une des revendications 12 à 30 selon lequel le dépôt a lieu sur la surface d'une bouteille de verre recyclée.

## Claims

1. Glass article carrying a coating which is practically transparent, capable of being labelled and resistant to abrasion, this coating resulting from the deposition, onto the surface of the glass article, of at least one monoaminosilane and of at least one lubricating substance, the monoaminosilane(s) corresponding to the general formula: 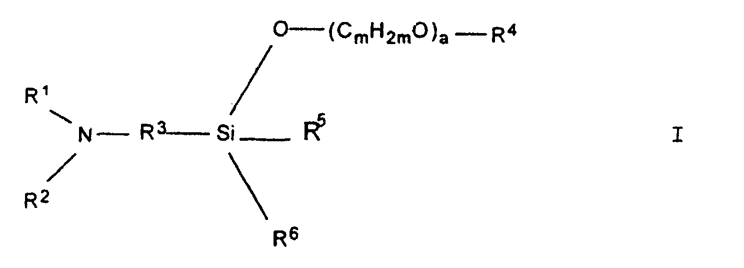 or in its quaternized form: 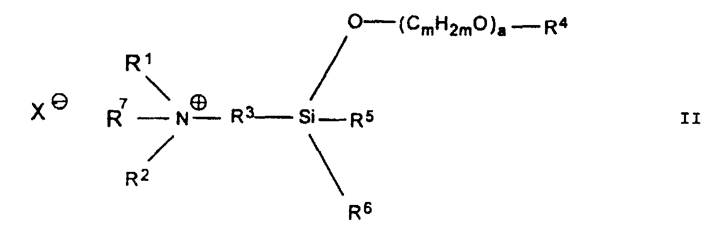 in which :
- each of R¹ and R², which are identical or different, denotes a hydrogen atom or an alkyl group containing from 1 to 4 carbon atoms,
- R³ is a linear or branched alkylene group containing 2 to 11 carbon atoms, in particular 3 to 5 carbon atoms, an oxyalkylene or polyoxyalkylene group containing from 2 to 4 carbon atoms in the alkylene chain, this oxyalkylene or polyoxyalkylene group being bonded to the silicon via a carbon atom,
- R⁴ denotes an alkyl group containing 1 to 4 carbon atoms,
- each of R⁵ and R⁶, which are identical or different, denotes an alkyl group containing 1 to 4 carbon atoms or else a group -O-(CₙH₂ₙO)_{b}-R⁴ in which R⁴ has the above meaning,
- each of m and n, which are identical or different, denotes the integer 2, 3 or 4,
- each of a and b, which are identical or different, denotes the integer 0, 1 or 2,
- R⁷ denotes a hydrogen atom or an alkyl group containing from 1 to 4 carbon atoms, and
- X^{⊖} is an anion,
and from a heat treatment simultaneous with or subsequent to this deposition, which consists in bringing at least the surface of the glass article to a temperature of between 60°C and 160°C,
the dry quantity of monoaminosilane(s) on the utilized surface of glass being between 10⁻⁴ mg/cm² and 5 x 10⁻² mg/cm² and the dry quantity of lubricating substance(s) on the utilized surface of glass being between 5 x 10⁻⁴ mg/cm² and 5 x 10⁻² mg/cm².

2. Article according to Claim 1, in which the coating comprises a dry quantity of monoaminosilane(s) deposited onto the utilized surface of glass of between 6 x 10⁻³ and 5 x 10⁻² mg/cm² and a dry quantity of lubricating substance(s) deposited onto the utilized surface of glass of between 2 x 10⁻³ mg/cm² and 10⁻² mg/cm².

3. Article in accordance with one of Claims 1 and 2, in which the coating results from the said deposition and from a simultaneous or subsequent heat treatment which consists in bringing at least the surface of the glass article to a temperature of between 80°C and 150°C.

4. Article in accordance with one of Claims 1 to 3, in which the monoaminosilane(s) correspond to the formulae I or II in which R¹ and R², which are identical or different, denote a hydrogen atom or a methyl group, R³ is a propylene, butylene or isopropylene group, R⁴ denotes a methyl or ethyl group, each of R⁵ and R⁶, which are identical or different, denotes a methyl or ethyl group or else the group -O-(CₙH₂ₙO)_{b}-R⁴, m and n denote the integer 2 or 3, a and b denote the number 0, 1 or 2, R⁷ is a hydrogen atom or a methyl group and X^{⊖} is the chloride, bromide, sulphate or methylsulphate anion.

5. Article according to Claim 4, in which the monoaminosilane(s) are chosen from the group made up of 3-aminopropyltrimethoxysilane, 3-aminopropyltriethoxysilane, 4-aminobutyltrimethoxysilane, N-methyl-3-aminopropyltrimethoxysilane and 3-aminopropyltris(2-methoxyethoxyethoxy)silane.

6. Article according to one of Claims 1 to 5, in which the lubricating substance is chosen from the group made up of oleic acid, sodium stearate, ammonium stearate, long-chain alkylamine acetate, polyethylene glycol, a polyolefin or a mixture of these substances.

7. Article according to one of Claims 1 to 6, in which the lubricating substance is an optionally oxidized or partially oxidized polyolefin.

8. Article in accordance with Claim 7, in which the oxidized or partially oxidized polyolefin is oxidized or partially oxidized polyethylene.

9. Article in accordance with Claim 8, in which the polyethylene has a weight-average molecular mass of between 1000 and 15 000.

10. Glass article bearing a coating in accordance with one of Claims 1 to 9, consisting of a glass bottle bearing the said coating.

11. Article in accordance with Claim 10, consisting of a recycled glass bottle bearing the said coating.

12. Process for the manufacture of a glass article in accordance with one of Claims 1 to 11, characterized in that it consists in depositing onto the surface of the glass article at least one lubricating substance, the monoaminosilane(s) corresponding to the general formula: 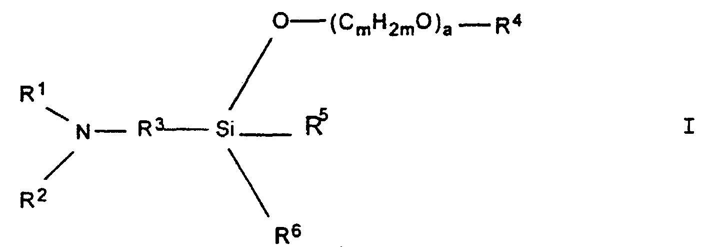 or in its quaternized form: 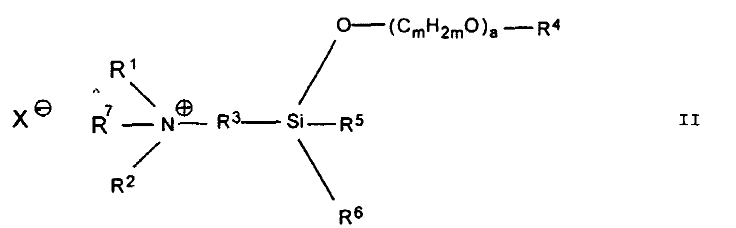 in which:
- each of R¹ and R², which are identical or different, denotes a hydrogen atom or an alkyl group containing from 1 to 4 carbon atoms,
- R³ is a linear or branched alkylene group containing 2 to 11 carbon atoms, in particular 3 to 5 carbon atoms, or else an oxyalkylene or polyoxyalkylene group containing from 2 to 4 carbon atoms in the alkylene chain, this oxyalkylene or polyoxyalkylene group being bonded to the silicon via a carbon atom,
- R⁴ denotes an alkyl group containing 1 to 4 carbon atoms,
- each of R⁵ and R⁶, which are identical or different, denotes an alkyl group containing 1 to 4 carbon atoms or else a group -O-(CₙH₂ₙO)_{b}-R⁴ in which R⁴ has the above meaning,
- each of m and n, which are identical or different, denotes the integer 2, 3 or 4,
- each of a and b, which are identical or different, denotes the integer 0, 1 or 2,
- R⁷ denotes a hydrogen atom or an alkyl group containing from 1 to 4 carbon atoms, and
- X^{⊖} is an anion,
and in carrying out, simultaneously with or subsequently to this deposition, heat treatment by bringing at least the surface of the glass article to a temperature of between 60°C and 160°C to give a coating in which the dry quantity of monoamino-silane(s) deposited onto the utilized surface of glass is between 10⁻⁴ mg/cm² and 5 × 10⁻² mg/cm² and the dry quantity of lubricating substance(s) deposited onto the utilized surface of glass is between 5 × 10⁻⁴ mg/cm² and 5 × 10⁻² mg/cm².

13. Process in accordance with Claim 12 in which the heat treatment simultaneous with or subsequent to the said deposition consists in bringing at least the surface of the glass article to a temperature of between 80°C and 150°C.

14. Process in accordance with one of Claims 12 and 13, according to which a coating is obtained in which the dry quantity of monoaminosilane(s) deposited onto the utilized surface of glass is between 6 × 10⁻³ and 5 × 10⁻² mg/cm² and the dry quantity of lubricating substance(s) deposited onto the utilized surface of glass is between 5 × 10⁻⁴ and 5 × 10⁻² mg/cm2.

15. Process in accordance with one of Claims 12 to 14, according to which an aqueous composition of monoaminosilane(s) and of lubricating substance(s) is deposited in one stage onto the glass surface.

16. Process in accordance with Claim 15, according to which the composition is deposited onto the glass surface which is at a temperature of between 60°C and 160°C, preferably between 80°C and 150°C.

17. Process in accordance with Claim 15, according to which the composition is deposited onto the glass surface at a temperature lower than 60°C and a heat treatment is then applied by heating at least the glass surface to a temperature of between 60°C and 160°C, preferably between 80°C and 150°C.

18. Process in accordance with one of Claims 12 to 14, according to which an aqueous solution of monoaminosilane(s) is deposited in a first stage and an aqueous composition of lubricating substance(s) in a second stage.

19. Process in accordance with Claim 18, according to which the aqueous solution of monoaminosilane(s) is deposited onto the surface of the glass, which is at a temperature of between 60°C and 160°C, preferably between 80°C and 150°C, and then the aqueous composition of lubricating substance(s) is deposited, the glass surface being at a temperature of between 60°C and 160°C, preferably between 80°C and 150°C.

20. Process in accordance with Claim 18, according to which:
a) first, the aqueous solution of monoaminosilane(s) is deposited onto the surface of the glass at a temperature lower than 60°C,
b) at least the surface of the glass is next heated to a temperature of between 60°C and 160°C, preferably between 80°C and 150°C, and
c) the aqueous composition of lubricating substance(s) is deposited, at least the glass surface being heated to a temperature of between 60°C and 160°C, preferably between 80°C and 150°C, before or after the deposition of the aqueous composition of lubricating substance(s).

21. Process in accordance with Claim 18, according to which the aqueous solution of monoaminosilane(s) and the aqueous composition of lubricating substance(s) are deposited successively at a temperature lower than 60°C and heat treatment is then applied by heating at least the glass surface to a temperature of between 60°C and 160°C, preferably between 80°C and 150°C.

22. Process in accordance with one of Claims 12 to 21, according to which at least one monoaminosilane is employed corresponding to the formulae I or II, in which R¹ and R², which are identical or different, denote a hydrogen atom or a methyl group, R³ is a propylene, butylene or isopropylene group, R⁴ denotes a methyl or ethyl group, each of R⁵ and R⁶, which are identical or different, denotes a methyl or ethyl group or else the group -O-(CₙH₂ₙO)_{b}-R⁴, m and n denote the integer 2 or 3, a and b denote the number 0, 1 or 2, R⁷ is a hydrogen atom or a methyl group and X^{⊖} is the chloride, bromide, sulphate or methylsulphate anion.

23. Process in accordance with Claim 22, according to which the monoaminosilane is chosen from the group made up of 3-aminopropyltrimethoxysilane, 3-aminopropyltriethoxysilane, 4-aminobutyltrimethoxysilane, N-methyl-3-aminopropyltrimethoxysilane and 3-aminopropyltris(2-methoxyethoxyethoxy)silane.

24. Process in accordance with one of Claims 12 to 23, according to which the components monoaminosilane(s) and lubricating substance(s) are deposited in aqueous composition(s) containing from 0.005 % to 2 % by weight, preferably from 0.01 % to 1.5 % by weight, of monoaminosilane(s) and from 0.10 % to 2 % by weight, preferably from 0.15 % to 1.5 % by weight, of lubricating substance(s).

25. Process in accordance with one of Claims 12 to 24, according to which the lubricating substance is chosen from the group made up of oleic acid, sodium stearate, ammonium stearate, long-chain alkylamine acetate, polyethylene glycol, a polyolefin or a mixture of these substances.

26. Process in accordance with one of Claims 12 to 25, according to which the lubricating substance is an optionally oxidized or partially oxidized polyolefin.

27. Process in accordance with Claim 26, according to which oxidized or partially oxidized polyethylene is employed as polyolefin.

28. Process in accordance with Claim 27, in which the polyethylene has a weight-average molecular mass of between 1000 and 15 000.

29. Process in accordance with one of Claims 25 to 28, according to which the polyolefin is in the form of ionic or nonionic aqueous emulsion.

30. Process in accordance with one of Claims 12 to 29, according to which the heat treatment is carried out with the aid of an oven, with a hot air blast, with infrared radiation or microwaves.

31. Process in accordance with one of Claims 12 to 16, 18 and 19, in which the heat treatment takes place at the exit from the annealing lehr.

32. Process in accordance with one of Claims 12 to 31, according to which the deposition takes place on the surface of a glass bottle.

33. Process in accordance with one of Claims 12 to 30, according to which the deposition takes place on the surface of a recycled glass bottle.

## Patentansprüche

1. Gegenstand aus Glas, der einen praktisch durchsichtigen, etikettierbaren und abriebfesten Überzug aufweist, wobei dieser Überzug das Ergebnis der Beschichtung der Oberfläche des Gegenstands aus Glas mit mindestens einem Monoaminosilan und mindestens einem Gleitmittel, wobei das/die Monoaminosilan(e) die allgemeine Formel 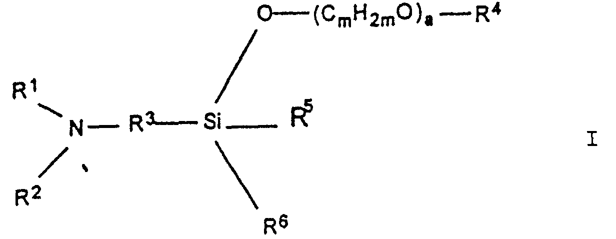 aufweist/aufweisen oder der quartären Form 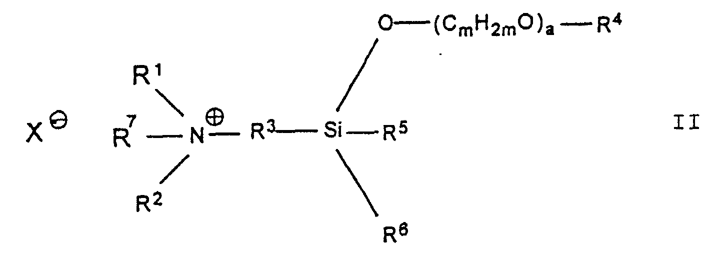 entspricht/entsprechen, worin bedeuten:
- R¹ und R², die gleich oder verschieden sind, jeweils ein Wasserstoffatom oder eine Alkylgruppe mit 1 bis 4 Kohlenstoffatomen,
- R³ eine geradkettige oder verzweigte Alkylengruppe mit 2 bis 11 Kohlenstoffatomen, insbesondere 3 bis 5 Kohlenstoffatomen, eine Oxyalkylen- oder Polyoxyalkylengruppe mit 2 bis 4 Kohlenstoffatomen in der Alkylenkette, wobei diese Oxyalkylen- oder Polyoxyalkylengruppe mit dem Siliciumatom über ein Kohlenstoffatom verbunden ist,
- R⁴ eine Alkylgruppe mit 1 bis 4 Kohlenstoffatomen,
- R⁵ und R⁶, die gleich oder verschieden sind, jeweils eine Alkylgruppe mit 1 bis 4 Kohlenstoffatomen oder eine Gruppe
-O-(CₙH₂ₙO)_{b}-R⁴,
worin R⁴ die oben angegebene Bedeutung hat,
- m und n, die gleich oder verschieden sind, jeweils die ganze Zahl 2, 3 oder 4,
- a und b, die gleich oder verschieden sind, jeweils die ganze Zahl 0, 1 oder 2,
- R⁷ ein Wasserstoffatom oder eine Alkylgruppe mit 1 bis 4 Kohlenstoffatomen,
- X^{⊖} ein Anion,
und einer gleichzeitig mit dieser Beschichtung oder anschließend an diese Beschichtung durchgeführten Wärmebehandlung ist, die darin besteht, mindestens die Oberfläche des Gegenstands aus Glas auf eine Temperatur von 60 bis 160 °C zu erwärmen, wobei die Trockenmenge an Monoaminosilan(en) auf der nutzbaren Oberfläche des Glases im Bereich von 10⁻⁴ mg/cm² bis 5·10⁻² mg/cm² liegt und die Trockenmenge an Gleitmittel(n) auf der nutzbaren Oberfläche des Glases im Bereich von 5·10⁻⁴ mg/cm² bis 5·10⁻² mg/cm² liegt.

2. Gegenstand nach Anspruch 1, wobei der Überzug eine Trockenmenge an Monoaminosilan(en), mit dem/denen die nutzbare Oberfläche des Glases beschichtet ist, im Bereich von 6·10⁻³ bis 5·10⁻² mg/cm² aufweist und eine Trockenmenge an Gleitmittel(n), mit dem/denen die nutzbare Oberfläche des Glases beschichtet ist, im Bereich von 2·10⁻³ bis 10⁻² mg/cm² aufweist.

3. Gegenstand nach einem der Ansprüche 1 und 2, wobei der Überzug das Ergebnis dieser Beschichtung und einer gleichzeitig mit dieser Beschichtung oder daran anschließend durchgeführten Wärmebehandlung ist, die darin besteht, mindestens die Oberfläche des Gegenstands aus Glas auf eine Temperatur von 80 bis 150 °C zu bringen.

4. Gegenstand nach einem der Ansprüche 1 bis 3, wobei das oder die Monoaminosilan(e) der Formel I oder II entspricht/entsprechen, worin R¹ und R², die gleich oder verschieden sind, ein Wasserstoffatom oder eine Methylgruppe bedeuten, R³ Propylen, Butylen, Isobutylen ist, R⁴ Methyl oder Ethyl bedeutet, R⁵ und R⁶, die gleich oder verschieden sind, jeweils Methyl oder Ethyl oder die Gruppe -O-(CₙH₂ₙO)_{b}-R⁴ bedeuten, m und n die ganze Zahl 2 oder 3 bedeuten, a und b die Zahl 0, 1 oder 2 bedeuten, R⁷ ein Wasserstoffatom oder eine Methylgruppe ist und X^{⊖} das Chlorid-, Bromid-, Sulfat- oder Methylsulfatanion ist.

5. Gegenstand nach Anspruch 4, wobei das/die Monoaminosilan(e) unter 3-Aminopropyltrimethoxysilan, 3-Aminopropyltriethoxysilan, 4-Aminobutyltrimethoxysilan, N-Methyl-3-aminopropyltrimethoxysilan, 3-Aminopropyl-tris(2-methoxyethoxyethoxy)silan ausgewählt ist/sind.

6. Gegenstand nach einem der Ansprüche 1 bis 5, wobei das Gleitmittel unter Ölsäure, Natriumstearat, Ammoniumstearat, langkettigem Alkylaminacetat, Polyethylenglykol, Polyolefinen und Gemischen dieser Substanzen ausgewählt ist.

7. Gegenstand nach einem der Ansprüche 1 bis 6, wobei das Gleitmittel ein Polyolefin ist, das gegebenenfalls ganz oder teilweise oxidiert ist.

8. Gegenstand nach Anspruch 7, wobei das ganz oder teilweise oxidierte Polyolefin ein ganz oder teilweise oxidiertes Polyethylen ist.

9. Gegenstand nach Anspruch 8, wobei das Polyethylen ein Gewichtsmittel des Molekulargewichts im Bereich von 1 000 bis 15 000 aufweist.

10. Gegenstand aus Glas, der einen Überzug nach einem der Ansprüche 1 bis 9 aufweist, der aus einer Glasflasche besteht, die diesen Überzug trägt.

11. Gegenstand nach Anspruch 10, der aus einer durch Recycling erhaltenen Glasflasche besteht, die diesen Überzug trägt.

12. Verfahren zur Herstellung eines Gegenstands aus Glas nach einem der Ansprüche 1 bis 11, dadurch gekennzeichnet, daß es darin besteht, die Oberfläche des Gegenstands aus Glas mit mindestens einem Monoaminosilan und mindestens einem Gleitmittel zu beschichten, wobei das/die Monoaminosilan(e) die allgemeine Formel 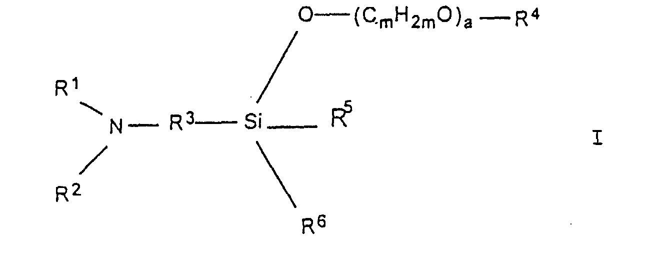 aufweist/aufweisen oder der quartären Form 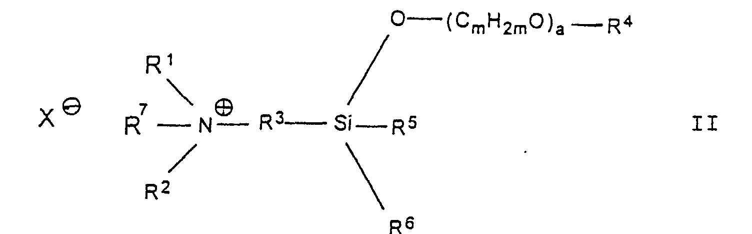 entspricht/entsprechen, worin bedeuten:
- R¹ und R², die gleich oder verschieden sind, jeweils ein Wasserstoffatom oder eine Alkylgruppe mit 1 bis 4 Kohlenstoffatomen,
- R³ eine geradkettige oder verzweigte Alkylengruppe mit 2 bis 11 Kohlenstoffatomen, insbesondere 3 bis 5 Kohlenstoffatomen, eine Oxyalkylen- oder Polyoxyalkylengruppe mit 2 bis 4 Kohlenstoffatomen in der Alkylenkette, wobei diese Oxyalkylen- oder Polyoxyalkylengruppe mit dem Siliciumatom über ein Kohlenstoffatom verbunden ist,
- R⁴ eine Alkylgruppe mit 1 bis 4 Kohlenstoffatomen,
- R⁵ und R⁶, die gleich oder verschieden sind, jeweils eine Alkylgruppe mit 1 bis 4 Kohlenstoffatomen oder eine Gruppe
-O-(CₙH₂ₙO)_{b}-R⁴,
worin R⁴ die oben angegebene Bedeutung hat,
- m und n, die gleich oder verschieden sind, jeweils die ganze Zahl 2, 3 oder 4,
- a und b, die gleich oder verschieden sind, jeweils die ganze Zahl 0, 1 oder 2,
- R⁷ ein Wasserstoffatom oder eine Alkylgruppe mit 1 bis 4 Kohlenstoffatomen,
- X^{⊖} ein Anion,
und gleichzeitig mit der Beschichtung oder daran anschließend eine Wärmebehandlung durchzuführen, bei der mindestens die Oberfläche des Gegenstands aus Glas auf eine Temperatur von 60 bis 160 °C erwärmt wird, um einen Überzug zu erhalten, dessen Trockenmenge an Monoaminosilan(en), mit dem/denen die nutzbare Oberfläche des Glases beschichtet ist, 10⁻⁴ bis 5·10⁻² mg/cm² beträgt und dessen Trockenmenge an Gleitmittel(n), mit dem/denen die nutzbare Oberfläche des Glases beschichtet ist, 5·10⁻⁴ bis 5·10⁻² mg/cm² beträgt.

13. Verfahren nach Anspruch 12, wobei die gleichzeitig mit der Beschichtung durchgeführte oder sich daran anschließende Wärmebehandlung darin besteht, mindestens die Oberfläche des Gegenstands aus Glas auf eine Temperatur von 80 bis 150 °C zu erwärmen.

14. Verfahren nach einem der Ansprüche 12 und 13, durch das ein Überzug erhalten wird, dessen Trockenmenge an Monoaminosilan(en), mit dem/denen die nutzbare Oberfläche des Glases beschichtet ist, 6·10⁻³ bis 5·10⁻² mg/cm² beträgt und dessen Trockenmenge an Gleitmittel(n), mit dem/denen die nutzbare Oberfläche des Glases beschichtet ist, 5·10⁻⁴ bis 5·10⁻² mg/cm² beträgt.

15. Verfahren nach einem der Ansprüche 12 bis 14, wobei die Oberfläche des Glases in einem einzigen Schritt mit einer wäßrigen Zusammensetzung des/der Monoaminosilans/Monoaminosilane und des/der Gleitmittels/Gleitmittel beschichtet wird.

16. Verfahren nach Anspruch 15, wobei die Zusammensetzung auf die Oberfläche des Glases, die eine Temperatur von 60 bis 160 °C, vorzugsweise 80 bis 150 °C, aufweist, aufgebracht wird.

17. Verfahren nach Anspruch 15, wobei die Oberfläche des Glases, die eine Temperatur unter 60 °C aufweist, mit der Zusammensetzung beschichtet wird, wonach eine Wärmebehandlung durchgeführt wird, bei der mindestens die Oberfläche des Glases auf eine Temperatur von 60 bis 160 °C, vorzugsweise 80 bis 150 °C, gebracht wird.

18. Verfahren nach einem der Ansprüche 12 bis 14, wobei in einem ersten Schritt eine wäßrige Lösung des/der Monoaminosilans/Monoaminosilane und in einem zweiten Schritt eine wäßrige Zusammensetzung des/der Gleitmittels/Gleitmittel aufgebracht wird.

19. Verfahren nach Anspruch 18, bei dem die Oberfläche des Glases, die eine Temperatur von 60 bis 160 °C, vorzugsweise 80 bis 150 °C, aufweist, mit der wäßrigen Lösung des/der Monoaminosilans/Monoaminosilane beschichtet wird, wonach die wäßrige Zusammensetzung des/der Gleitmittels/Gleitmittel aufgetragen wird, wobei die Oberfläche des Glases eine Temperatur von 60 bis 160 °C, vorzugsweise 80 bis 150 °C, aufweist.

20. Verfahren nach Anspruch 18, bei dem
a) zunächst die Oberfläches des Glases, die eine Temperatur unter 60 °C aufweist, mit der wäßrigen Lösung des/der Monoaminosilans/Monoaminosilane beschichtet wird,
b) anschließend mindestens die Oberfläche des Glases bis auf eine Temperatur von 60 bis 160°C, vorzugsweise 80 bis 150°C, erwärmt wird, und
c) die wäßrige Zusammensetzung des/der Gleitmittels/Gleitmittel aufgetragen wird, wobei mindestens die Oberfläche des Glases auf eine Temperatur von 60 bis 160 °C, vorzugsweise 80 bis 150 °C, vor oder nach dem Auftragen der wäßrigen Zusammensetzung des/der Gleitmittels/Gleitmittel erwärmt wird.

21. Verfahren nach Anspruch 18, bei dem bei einer Temperatur unter 60 °C nacheinander mit der wäßrigen Lösung des/der Monoaminosilans/Monoaminosilane und der wäßrigen Zusammensetzung des/der Gleitmittels/Gleitmittel beschichtet wird, worauf eine Wärmebehandlung folgt, bei der mindestens die Oberfläche des Glases auf eine Temperatur von 60 bis 160 °C, vorzugsweise 80 bis 150 °C, gebracht wird.

22. Verfahren nach einem der Ansprüche 12 bis 21, wobei mindestens ein Monoaminosilan der Formel I oder II verwendet wird, worin R¹ und R², die gleich oder verschieden sind, ein Wasserstoffatom oder eine Methylgruppe bedeutet, R³ Propylen, Butylen, Isobutylen ist, R⁴ Methyl oder Ethyl bedeutet, R⁵ und R⁶, die gleich oder verschieden sind, jeweils Methyl oder Ethyl oder die Gruppe -O-(CₙH₂ₙO)_{b}-R⁴ bedeuten, m und n die ganze Zahl 2 oder 3 bedeuten, a und b die Zahl 0, 1 oder 2 bedeuten, R⁷ ein Wasserstoffatom oder eine Methylgruppe ist und X^{⊖} das Chlorid-, Bromid-, Sulfat- oder Methylsulfatanion ist.

23. Verfahren nach Anspruch 22, wobei das Monoaminosilan unter 3-Aminopropyltrimethoxysilan, 3-Aminopropyltriethoxysilan, 4-Aminobutyltrimethoxysilan, N-Methyl-3-aminopropyltrimethoxysilan, 3-Aminopropyl-tris(2-methoxyethoxyethoxy)silan ausgewählt wird.

24. Verfahren nach einem der Ansprüche 12 bis 23, wobei der/die Monoaminosilan-Bestandteil(e) und das/die Gleitmittel in wäßriger Lösung/wäßrigen Lösungen aufgetragen wird/werden, die 0,005 bis 2 Gew.%, vorzugsweise 0,01 bis 1,5 Gew.% Monoaminosilan(e) und 0,10 bis 2 Gew.%, vorzugsweise 0,15 bis 1,5 Gew.%, Gleitmittel enthält/enthalten.

25. Verfahren nach einem der Ansprüche 12 bis 24, wobei das Gleitmittel unter Ölsäure, Natriumstearat, Ammoniumstearat, langkettigem Alkylaminacetat, Polyethylenglykol, Polyolefinen und Gemischen dieser Substanzen ausgewählt wird.

26. Verfahren nach einem der Ansprüche 12 bis 25, wobei es sich bei dem Gleitmittel um ein Polyolefin handelt, das gegebenenfalls ganz oder teilweise oxidiert ist.

27. Verfahren nach Anspruch 26, wobei als Olefin ganz oder teilweise oxidiertes Polyethylen verwendet wird.

28. Verfahren nach Anspruch 27, wobei das Polyethylen ein Gewichtsmittel des Molekulargewichts von 1 000 bis 15 000 aufweist.

29. Verfahren nach einem der Ansprüche 25 bis 28, wobei das Polyolefin in Form einer ionischen oder nichtionischen wäßrigen Emulsion vorliegt.

30. Verfahren nach einem der Ansprüche 12 bis 29, wobei die Wärmebehandlung mit Hilfe eines Ofens, durch Aufblasen von heißer Luft, durch Infrarot- oder Mikrowellenbestrahlung erfolgt.

31. Verfahren nach einem der Ansprüche 12 bis 16, 18 und 19, wobei die Wärmebehandlung am Auslaß eines Kühlofens stattfindet.

32. Verfahren nach einem der Ansprüche 12 bis 31, wobei die Oberfläche einer Glasflasche beschichtet wird.

33. Verfahren nach einem der Ansprüche 12 bis 30, wobei die Oberfläche einer durch Recycling gewonnenen Glasflasche beschichtet wird.
